# EUROPEAN PATENT APPLICATION

(11) **EP 1 914 451 A2**
(43) Date of publication of application: **23.04.2008**
(21) Application number: 07115507.1
(22) Date of filing: 03.09.2007
(51) Int. Cl.: F16H 55/56

(54) **Driven pulley in V-belt automatic transmission device**

(30) Priority: 16.10.2006 JP 2006282063
(71) Applicant: Yamada Manufacturing Co., Ltd., Kiryu-shi, Gunma-ken (JP)
(72) Inventor: Kawashima, Yoshinori c/o Yamada Manufacturing Co., Ltd., Gunma-ken (JP)
(74) Representative: Skone James, Robert Edmund

(57) **Abstract**

A driven pulley in a V-belt automatic transmission device in a motorcycle, in which the pulley width in the driven pulley is varied by slightly reducing the width to apply a lateral load appropriate for the engine torque so that the rotation transmission ratio is improved and the driven pulley follows the V-belt extremely well.

The driven side pulley includes a driven shaft 1; a boss member 5 that rotates together with the driven shaft 1; a movable half pulley 2 that rotates together with the boss member 5 and moves in the axial direction; a base half pulley A, on which movable cams 4 are formed on the rear surface 212 of the pulley face 21 and around the periphery of a boss hole portion 31 and for which the boss member 5 is passed through the boss hole portion 31 so that the base half pulley A is slidably supported; and a cam ring B on which fixed cams 7 are formed on a ring shaped base 6, and which is fixed to a shaft end portion of the boss member 5. The movable cams 4 of the base half pulley A can contact the fixed cams 7, and the movable cams 4 can be spaced (slightly move) in the axial direction from the fixed cams 7.

## Description

The present invention relates to a driven pulley in a V-belt automatic transmission device, in which the pulley width of the driven pulley is varied by slightly reducing the width so that a lateral load appropriated for the engine torque is applied, slip between the V-belt and the driven pulley is prevented, the transmission ratio is improved, and a driven pulley follows the V-belt extremely well.

V-belt automatic transmission devices are device in which the torque generated by a power source, such as an engine, is transmitted from a drive side variable pulley to a driven side variable pulley via a V-belt that is wound around the two pulleys. When the torque is transmitted, the diameter of winding of the V-belt around the pulleys is varied as appropriate by the centrifugal force acting on weight rollers provided in the drive side variable pulley and a torque detection mechanism provided in the driven side variable pulley. Also, Japanese Patent Application Laid-open No. H4-151052 discloses a V-belt automatic transmission device of this type, provided with a cam mechanism that forces a movable pulley towards a fixed pulley that is fixed integrally with the rotation shaft, by an amount in accordance with the load torque.

The device disclosed in Japanese Patent Application Laid-open No. H4-151052 includes a drive side cam mechanism in the constitution of the drive pulley, and a driven side cam mechanism in the constitution of the driven pulley. These cam mechanisms include a fixed cam and a movable cam. Also, in the drive side cam mechanism, the fixed cam is integrally fixed to the drive shaft, and the movable cam is integrally fixed to the movable pulley, and when power is being transmitted the two cams are always in contact with each other via slanting surfaces. In the driven side cam mechanism, the fixed cam is integrally fixed to a side plate fixed to the driven shaft, and the movable cam is fixed to the movable pulley, and has a slanting surface that contacts the slanting surface of the fixed cam.

The above cam mechanisms include a fixed cam fixed to the shaft member side and a movable cam fixed to the movable pulley side. Also, the movable pulley is moved towards the fixed pulley by the cam mechanisms. Also, the width of the pulley groove is narrowed by the cam force on the slanting surfaces of the fixed cam and the movable cam, in accordance with the magnitude of the belt transmission power. In other words, the movable pulley moves in the direction that increases the diameter of winding of the belt, to adjust the diameter to a suitable size.

Japanese Patent Application Laid-open No. S56-35853 discloses an automatic transmission for a motorcycle in which the driven pulley rotates in response to the rotation power transmitted from the drive pulley. The driven pulley includes a fixed pulley and a movable pulley. The movable pulley of the driven pulley is moved by a spring and cam mechanism along the axial direction away from the fixed pulley. Japanese Patent Application Laid-open No. S56-35853 also discloses that the driven pulley is provided with fly weights and a cam mechanism.

Next, Japanese Patent Application Laid-open No. S61-270548 discloses a device provided with a torque cam mechanism in which a cam groove is formed on a fixed pulley shaft provided with a fixed half-pulley and a movable pulley shaft provided with a movable half-pulley, respectively, and torque cam pins of pulley guide collars engage with the respective cam grooves. In this way, a torque cam mechanism is formed on the fixed pulley and on the movable pulley. The fixed pulley can rotate but cannot move in the axial direction like the movable pulley. The movable pulley shaft provided with the movable half pulley can rotate and also move in the axial direction. In this way, vibrations of the V pulley are prevented, and the durability of the V-belt is improved.

In Japanese Patent Application Laid-open No. H4-151052, the cam mechanism only moves the movable pulley relative to the fixed pulley. In the driven pulley, fly weights press only the movable pulley in the axial direction, and the belt transmission power is received and transmitted to the rotation shaft by the resultant force of the cam force of the cam mechanism and the fly weight pressing force. Also, in the drive pulley, the movable pulley only is pressed in the axial direction by a spring, and the rotation force of the drive shaft is transmitted to the belt by the resultant force of the cam force of the cam mechanism and the spring force. In the driven pulley, the belt transmission power is received and transmitted to the rotation shaft by the resultant force of the cam force of the cam mechanism and the spring force.

In Japanese Patent Application Laid-open No. S56-35853, there is a cam mechanism that moves the movable pulley only with respect to the fixed pulley. In the driven pulley, the movable pulley is pressed in the axial direction by a fly weight and cam mechanism. The belt transmission power is received and transmitted to the rotation shaft by the resultant force of the cam force of the cam mechanism and the fly weight pressing force. Also, in the drive pulley, the movable pulley only is pressed in the axial direction by a cam mechanism and a spring, and the rotation force of the drive shaft is transmitted to the belt by the resultant force of the cam force of the cam mechanism and the spring force.

In Japanese Patent Application Laid-open No. S61-270548, a cam mechanism that moves the movable pulley only with respect to the fixed pulley and a spring is provided on the movable pulley on one side. In particular, in the driven pulley, the belt is pinched and the belt transmission power is received and transmitted to the driven shaft by the resultant force of a cam force which moves the movable pulley only with respect to the fixed pulley and the spring force. In these three patent documents (Japanese Patent Application Laid-open No. H4-151052, Japanese Patent Application Laid-open No. S56-35853, Japanese Patent Application Laid-open No. S61-270548), a belt transmission friction force is generated between the pulley and the belt when the belt transmission power is received. When the force pressing on the pulley is large, this belt transmission friction force acts as a frictional resistance factor, which affects the transmission ratio. Of the forces pressing on the pulley, the spring force is set corresponding to the maximum speed reduction ratio, for which a particularly large force pressing on the pulley is necessary. Therefore, when the speed reduction ratio is at a minimum, when it does not matter if a small force is pressing on the pulley, the force is larger than necessary, so it acts as a frictional resistance factor, which has the problem that the transmission ratio is reduced.

In further detail, when the speed reduction ratio is at the maximum (when the diameter of winding of the belt around the driven pulley is at the maximum), the force resisting the separation of the movable pulley from the fixed pulley is set to the resultant force of the cam force and the spring force. In contrast to this, when the speed reduction ratio is at the minimum (when the diameter of winding of the belt around the driven pulley is at the minimum), the force is similarly set in the cam and spring so that the movable pulley and the fixed pulley can easily separate. However, this is incompatible with the situation when the speed reduction ratio is at the maximum as described above. Therefore, it is extremely difficult to satisfy the situation for both the maximum speed reduction ratio and the minimum speed reduction ratio.

Further, in Japanese Patent Application Laid-open No. S61-270548, the cam mechanisms formed in both the fixed pulley and the movable pulley provide torque pins of the pulley guide collar at one or two locations in the axial direction. Therefore the constituent components become larger in the diametral direction and the axial direction, which has the problem that the device becomes larger. It is an object (technical task or object) of the present invention to provide a V-belt automatic transmission device capable of generating a suitable lateral load more appropriate to the engine torque, so that efficiency of the V-belt transmission can be improved.

Therefore, as a result of diligent research by the inventors to solve the above object, the invention according to claim 1 solves the above object with a driven pulley in a V-belt type automatic transmission device, comprising: a driven shaft; a boss member that rotates together with the driven shaft; a movable half pulley that rotates together with the boss member and moves in the axial direction; a base half pulley, on which movable cams are formed on the rear surface of the pulley face and around the periphery of a boss hole portion, and for which the boss member is passed through the boss hole portion so that the base half pulley is slidably supported; and a cam ring on which fixed cams are formed on a ring shaped base, and which is fixed to a shaft end portion of the boss member, wherein the movable cams of the base half pulley can contact the fixed cams, and the movable cams can be spaced in the axial direction from the fixed cams.

The invention according to claim 2 solves the above object with a driven pulley in a V-belt type automatic transmission device, comprising: a driven shaft; a boss member that rotates together with the driven shaft; a movable half pulley that rotates together with the boss member and moves in the axial direction; a base half pulley, on which movable cams are formed on the rear surface of the pulley face and around the periphery of a boss hole portion, and for which the boss member is passed through the boss hole portion so that the base half pulley is slidably supported; and a cam ring on which fixed cams are formed on a ring shaped base, and which is fixed to a shaft end portion of the boss member, wherein the movable cams and the fixed cams are always in contact, and the positions of contact of at least one of the movable cams and the fixed cams are formed as slanting surfaces such that the movable cams are moved in the axial direction of the drive shaft accompanied by a movement of the fixed cams in the direction of rotation of the drive shaft.

The invention according to claim 3 solves the above object in the configuration described above with a driven pulley in a V-belt automatic transmission device, in which the base half pulley and the cam ring are elastically pressed together in a continuous connection state. The invention according to claim 4 solves the above object in the configuration described above with a driven pulley in a V-belt automatic transmission device, in which the base half pulley and the cam ring connected together by a spindle shaped pin having elasticity. The invention according to claim 5 solves the above object in the configuration described above with a driven pulley in a V-belt automatic transmission device, in which regulating portions formed at appropriate intervals on the side of the contact portions of the movable cams in the base half pulley. The invention according to claim 6 solves the above object in the configuration described above with a driven pulley in a V-belt automatic transmission device, in which a plurality of the movable cams are formed at equal intervals along the circumferential direction around the periphery of the boss hole portion, and the number of fixed cams is the same as the number of movable cams, and the fixed cams are formed at the same intervals as the movable cams.

According to the invention of claim 1, the movable cams of the base half pulley contact the fixed cams, and the movable cams can move in the axial direction relative to the fixed cams. Therefore, the base half pulley can move together with the movable cams along the direction towards the movable pulley with the V-belt in between. In this way, the base half pulley moves towards the movable half pulley due to the V-belt tension force from to the drive pulley, a pressing force is generated on both sides of the V-belt causing contact between the V-belt and the pulley, so that slip between the V-belt and the pulley can be prevented. Also, it is possible to stabilize the transmission of motive power from the drive pulley to the driven pulley, so smooth and efficient transmission is possible. Further, the belt transmission friction force between the pulley and the V-belt is optimized, so it is possible to improve the efficiency of the V-belt transmission, and it is possible to generate a suitable lateral load in accordance with the engine torque.

Also, it is possible to appropriately reduce the spring force that presses on the pulley, so an excessive lateral load is not applied to the V-belt by the base half pulley and the movable half pulley, so wear of the V-belt is prevented, and the life of the V-belt can be extended. Further, it is possible to appropriately reduce the initially set spring force compared with the spring force used in a conventional structure. Therefore, at low engine torques, the excessive force due to the spring force is reduced, it is possible to reduce the friction losses, and the transmission ratio at all speed change areas can be improved. Also, it is possible to stabilize the operation of the movable half pulley. Also, there is no need to provide an enlarged structure in the axial direction and the diametral direction, so enlargement of the device is avoided.

According to the invention of claim 2, at least one of the contact portions of the fixed cams has a slanted surface so that the movable cams move in the axial direction of the drive shaft together with a movement of the fixed cams in the direction of rotation of the drive shaft. Therefore, the fixed cams contact the movable cams, and the base half pulley is moved in the axial direction, the base half pulley instantaneously responds, moving towards the movable half pulley, the pulley width is narrowed, the V-belt is contacted with a pressing force at both sides in the width direction, and it is possible to prevent slip between the V-belt and the pulley.

Also, by providing cams with slanting surfaces that cause movement of the movable cams in the axial direction of the drive shaft together with a movement of the fixed cams in the direction of rotation of the drive shaft, it is possible to stabilize the operation of the cam force in the base half pulley. Therefore it is possible to operate the base half pulley and the movable half pulley well with respect to the belt transmission force, which corresponds appropriately to the engine torque. Furthermore, by appropriately modifying the slanting surfaces, various types of cam can be easily provided. Therefore, the slanting surface can be set with respect to the base half pulley cam force or the spring force, so it is possible to appropriately set the cam force. Effects other than these effects are substantially the same as those in Claim 3.

According to the invention of claim 3, by having the base half pulley and the cam ring always connected to each other by an elastic pressing force, it is possible to reduce the separation of the base half pulley from the movable half pulley in response to the transmission of rotation from the V-belt, so it is possible to prevent slippage of the V-belt. Also, because of the elastic pressing force, when the movable cams move relative to the fixed cams in the axial direction of the drive shaft, it is possible to easily restore the original position prior to the movement, so it is possible to stabilize the operation of the base half pulley.

According to the invention of claim 4, the base half pulley and the cam ring are connected by spindle shaped pins having elasticity. Therefore, it is possible to make the connection structure of the base half pulley and the cam ring, and the restoring structure when they are separated extremely simple. According to the invention of claim 5, regulating portions are formed on the base half pulley at appropriate intervals from the contact portions of the movable cams. Therefore, the fixed cams are housed between the movable cams and the regulating portions. The regulating portions regulate the positions of the movable cams so that they do not separate too far from the fixed cams, so it is possible to always maintain the movable cams in a stable state.

According to the invention of claim 6, a plurality of movable cams is formed at equal intervals along the circumferential direction around the periphery of the boss hole portion, and the number of fixed cams is the same as the number of movable cams, and the fixed cams are formed at the same intervals as the movable cams. Therefore, because there is contact between a plurality of movable cams and an equal number of fixed cams, load is dispersed among the plurality of movable cams and fixed cams, so it is possible to improve the durability of the movable cams and the fixed cams.

Fig. 1A is a side section view through the present invention, Fig. 1B is a view at section Xa-Xa in the direction of the arrows in Fig. 1A;
Fig. 2A is an isometric view of the base half pulley, Fig. 2B is an enlarged view of the main part of Fig. 2A, Fig. 2C is a view at section Xb-Xb in the direction of the arrows in Fig. 2B, and Fig. 2D is an enlarged view of the main part of Fig. 2C;
Fig. 3A is an isometric view of the cam ring, Fig. 3B is a rear view of the cam ring, Fig. 3C is a side cross-section view of the cam ring, Fig. 3D is a front view of the cam ring, Fig. 3E is a view at section Xc-Xc in the direction of the arrows in Fig. 3B, Fig. 3F is an enlarged view of the main part of Fig. 3E;
Fig. 4A is a side sectioned view of the base half pulley and the cam ring in their connected state, Fig. 4B is an enlarged section view of the base half pulley and the cam ring connected by the spindle shaped pin, Fig. 4C is an enlarged view of the main part of Fig. 4B;
Fig. 5A is an exploded side section view of the base half pulley and the cam ring, Fig. 5B is a front view of the cam ring, Fig. 5C is a side cross-section through the boss member, Fig. 5D is a view at section Xd-Xd in the direction of the arrows in Fig. 5C;
Fig. 6A is an action diagram of the base half pulley and cam ring according to the present invention, Fig. 6B is an action diagram of the base half pulley in the state where it is slightly moved towards the movable half pulley;
Fig. 7 a side section view through an automatic transmission using the driven pulley according to the present invention; and
Fig. 8 is a side section view of the automatic transmission with the structure in which the fixed half pulley moves slightly when a sudden rotational acceleration is applied in the drive side pulley.

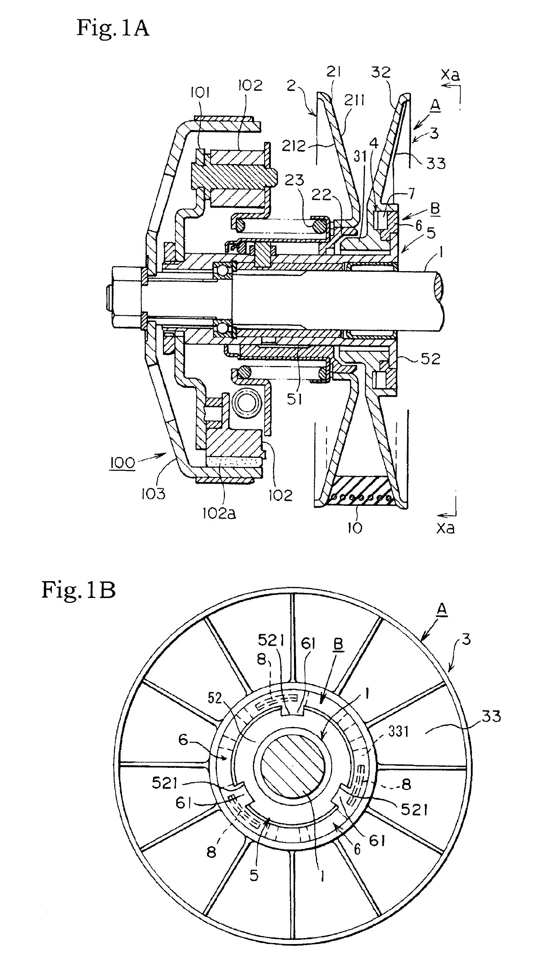

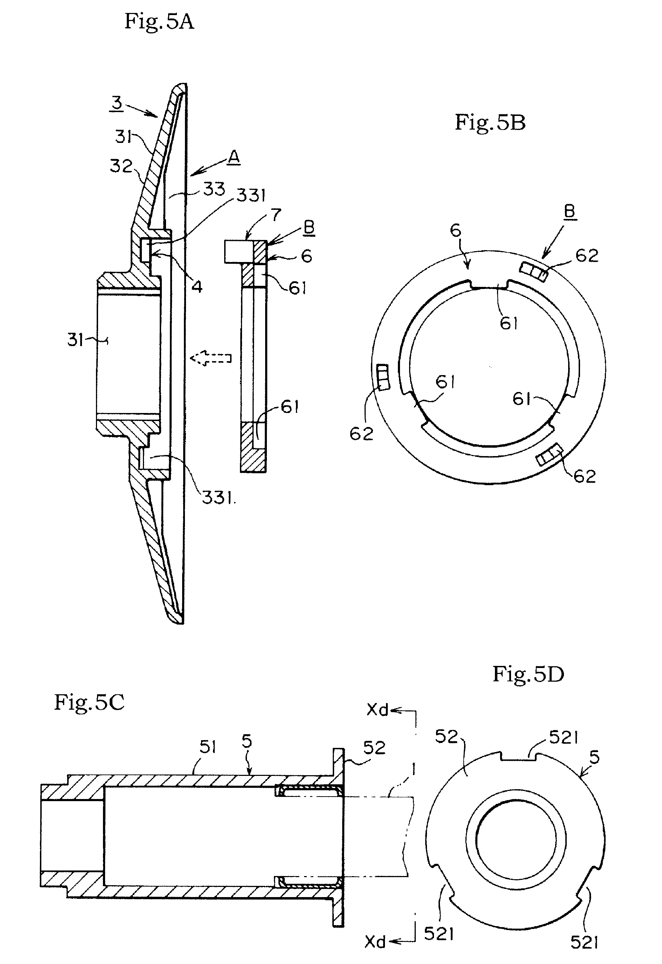

The following is an explanation of the embodiments of the present invention based on the drawings. As shown in Fig. 1A, the present invention includes mainly a driven shaft 1, a movable half pulley 2, a boss member 5, a base half pulley A, and a cam ring B. The boss member 5 is formed from a cylindrical shaft portion 51 and a rim shaped portion 52, as shown in Fig. 5C. The rim shaped portion 52 is formed in a circular plate shape, as shown in Fig. 5D, with engaging notches 521 formed at equal spacing. The engaging notches 521 engage with engaging projections 61 on the cam ring B, which is described later, which has the role of fixing the cam ring B to the boss member 5. The boss member 5 is connected to the driven shaft 1 via a centrifugal clutch 100, so that the boss member 5 and the driven shaft 1 rotate together.

The movable half pulley 2 includes a movable pulley face 21 and a movable boss portion 22, as shown in Fig. 1A. The movable pulley face 21 has a front surface 211 which is a flat conical shaped portion, and a rear surface 212 to the rear side of the front surface 211. An elastic spring 23 is disposed to the rear surface 212 and is elastically impelled towards the base half pulley A, which is described later. As the rate of rotation of a V-belt 10 increases, the movable half pulley 2 is moved towards the base half pulley A.

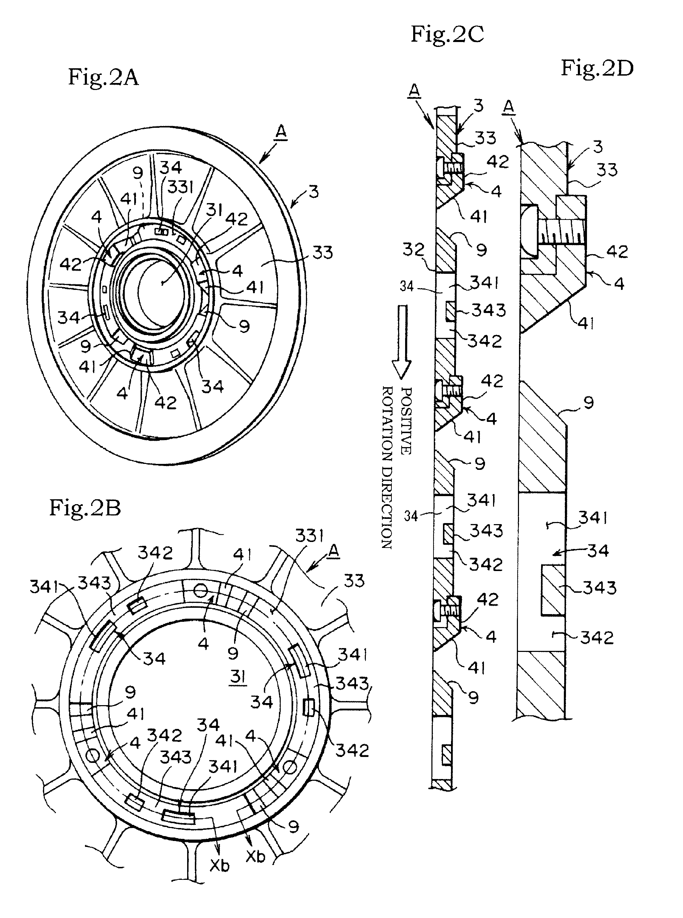

As shown in Figs. 1, 2A, and 5A, the base half pulley A includes a base pulley face 3 and a plurality of movable cams 4. A boss hole portion 31 is formed in the center of the base pulley face 3. The cylindrical shaft portion 51 of the boss member 5 is inserted into the boss hole portion 31 (see Fig. 1A) . Also, the base pulley face 3 has a front surface 32 and a rear surface 33. The front surface 32 and the rear surface 33 are in a front and rear relationship to each other. As shown in Figs. 2A and 2B, a circumferential groove shaped portion 331 is formed in the rear surface 33 and on the periphery of the boss hole portion 31. The plurality of movable cams 4 is provided in the groove shaped portions 331. Specifically, three movable cams 4 are formed at equal intervals. The movable cams 4 are either formed integrally with the pulley face 3, or formed as separate members.

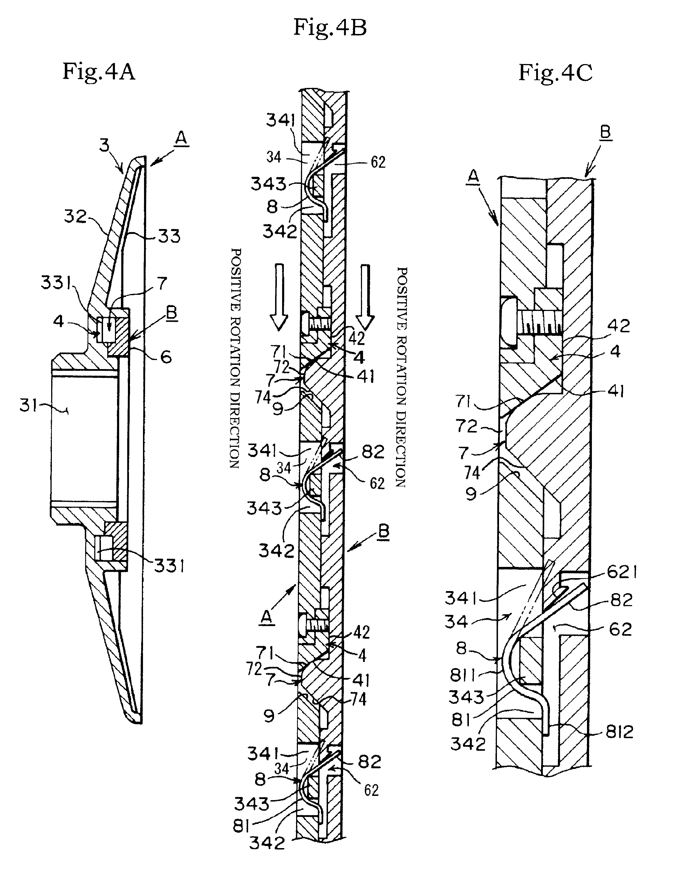

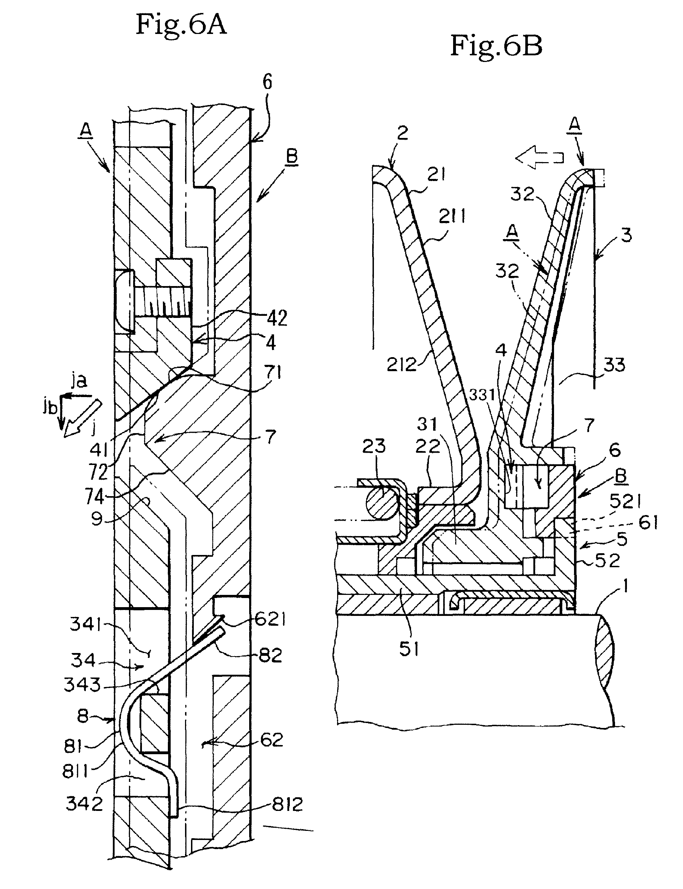

Further, regulating portions 9 are formed between adjacent movable cams 4, 4. The portions where the movable cams 4 contact fixed cams 7, which are described later, are referred to as contact portions 41. Further, the top portions 42 of the movable cams 4 are formed in a flat shape. The contact portions 41 are formed as slanting surfaces to serve as cam surfaces. The direction of slanting of the slanting surfaces of the contact portions 41 is such that the top portion 42 is further advance along the positive direction of rotation of the movable cam 4 than the base of the contact portion 41. More specifically, as shown in Figs. 4B, 4C, and 6A, the direction of slanting of the contact portion 41 is formed slanting upwards to the right with respect to the slanting surface of the contact surface 71 of the fixed cam 7, which is slanting downward to the left, in the positive rotation direction of the boss member 5, which is described later. Here positive rotation direction means the direction of rotation of the driven shaft 1, the base half pulley A, and the cam ring B, when moving forward (see Fig. 4).

Also, expressing the direction of slanting of the contact portion 41 in a different way, the surface slants upwards from the front surface 32 to the rear surface 33 of the base half pulley A, in the opposite direction to the positive rotation direction. Further, between adjacent movable cams 4, 4, latching portions 34 are formed for spindle shaped pins 8. A pair of through holes 341, 342 is formed in each latching portion 34, and the spindle shaped pins 8, which are described later, are latched at both ends in the axial direction by a latching thick portion 343 between the two through holes 341, 342. The latching portions 34 are formed together with the movable cams 4 within the groove shaped portion 331 (see Figs. 2B, 2C). The regulating portions 9 have slanting surfaces that slant in the opposite direction to those of the movable cams 4.

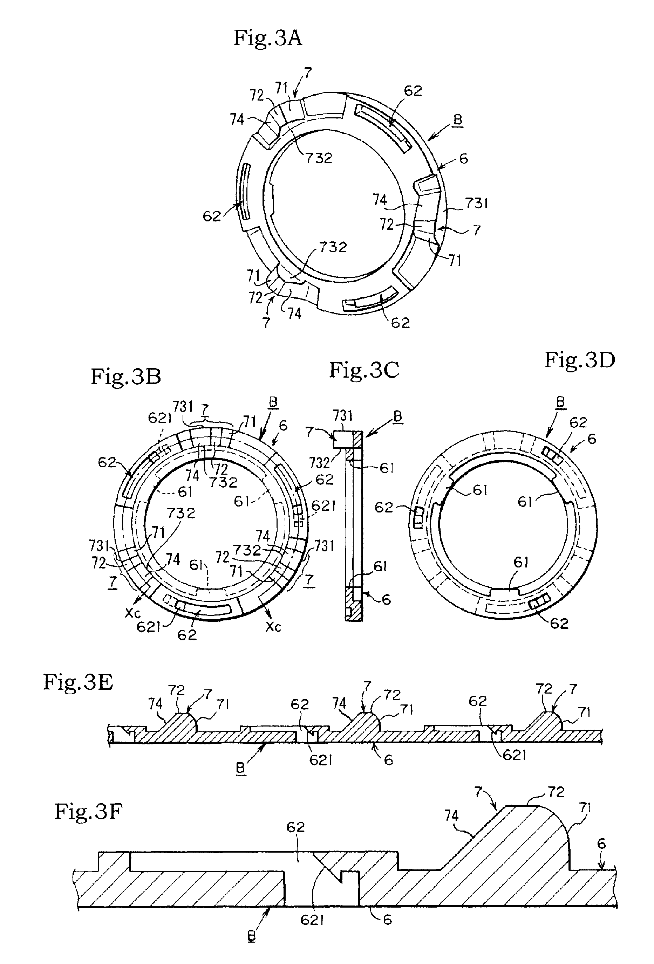

When the base half pulley A and the cam ring B are in the connected state, the fixed cams 7 of the cam ring B are housed between the movable cams 4 and the regulating portions 9 (see Figs. 4B, 4C). In this way, the regulating portions 9 perform the role of regulating the range of relative movement between the movable cams 4 and the fixed cams 7. Next, as shown in Figs. 3A and 3B, the cam ring is a ring shaped base 6 on which the fixed cams 7 are formed, made integrally from a synthetic resin or metal. The fixed cams 7 are formed as protrusions from the ring shaped base 6 in the axial direction. The part of the fixed cams 7 that contacts the contact portions 41 of the movable cams 4 are referred to as the contact portions 71 (see Figs. 3E and 3F).

Further, the top portion 72 of the fixed cams 7 is formed in a flat shape. Also, the outer peripheral portion 731 and the inner peripheral portion 732 of the fixed cams 7 are formed in a circular arc shape. Also, the trailing surface portion 74 is formed in a slanted shape. Also, latching hollow portions 62 are formed in the ring shaped base 6. The latching hollow portions 62 are formed between adjacent fixed cams 7, 7, and are the locations where the spindle shaped pins 8 are latched, to connect the cam ring B to the periphery of the boss hole portion 31 of the base half pulley A, as described later.

Firstly, the cylindrical shaft portion 51 of the boss member 5 is fitted to the driven shaft 1. Then, the cam ring B is connected to the base half pulley A at the rear surface 33 of the pulley face 3 using the spindle shaped pins 8 at the periphery of the boss hole portion 31 (see Figs. 4B, 4C). Also, latching projections 61 are formed at suitable locations on the inner periphery of the ring shaped base 6. The latching projections 61 latch with latching notches 521 formed in the rim shaped portion 52 of the boss member 5. In this way the cam ring B is latched to the rim section 52 of the boss member 5, so the boss member 5 is fixed and cannot move in the axial direction, and rotation is transmitted from the cam ring B to the boss member 5 (see Fig. 1B).

Then the fixed cams 7 of the cam ring B are inserted between the movable cams 4 and the regulating portions 9 of the base half pulley A of the base half pulley A, where there is some play. At this time, the fixed cams 7 are inserted into the groove shaped portion 331, where there is some play. Therefore, the groove shaped portion 331 and fixed cams 7 act as lead-ins for each other, so that the movable cams 4 can move in the proper direction. Furthermore, the contact portions 41 of the movable cams 4 and the contact portions 71 of the fixed cams 7 are disposed in opposition to each other, and the movable cams 4 and the fixed cams 7 are elastically pressed against each other by the elastic force of the spindle shaped pins 8. As shown in Figs. 4B and 4C, the spindle shaped pins 8 are stem members having elasticity, formed into an approximate "^" shape. From about the center in the long direction on one side of the spindle shaped pin 8 is an installation shaft portion 81, and in the other direction is a mating portion 82. The installation shaft portion 81 includes a circular arc shaped portion 811 and a latching tip portion 812.

The latching tip portion 812 of the installation shaft portion 81 is passed from the through hole 341, past the latching thick portion 343, and projects from the other through hole 342, and the latching tip portion 812 is latched to the rear surface 33 of the base pulley face 3. In this state, the latching tip portion 812 projects out from the rear surface 33 of the base pulley face 3. The projecting latching tip portion 812 has elasticity, so it is always elastically pressing against the rear surface 33. On the other hand, the latching hollow portions 62 are formed in the ring shaped base 6 of the cam ring B.

The mating portions 82 of the spindle shaped pins 8 are inserted into the latching hollow portions 62 where there is some play, and latched to latching projections 621 formed within the latching hollow portions 62, so that the base half pulley A is connected to the cam ring B. As stated previously, the base half pulley A is connected to the cam ring B by the spindle shaped pins 8, and the fixed cams 7 are inserted between the contact portions 41 of the base half pulley A and the regulating portions 9. Further, the contact portions 41 of the movable cams 4 and the contact portions 71 of the fixed cams 7 are always in contact and pressing against each other as a result of the elasticity of the mating portions 82 of the spindle shaped pins 8 (see Figs. 4B and 4C).

By connecting the base half pulley A and the cam ring B so that they are elastically pressed against each other by the spindle shaped pins 8, if the movable cams 4 separate from the fixed cams 7 by a very small amount in the axial direction of the driven shaft 1 (separation with a very small amount of movement), the original position prior to the small amount of separation can be easily restored, so it is possible to stabilize the operation of the base half pulley A. Further, the movable half pulley 2 is fitted to the boss member 5, and is elastically pressed against the base half pulley A by the elastic spring 23.

Also, the driven shaft 1 and the boss member 5 can be connected by the centrifugal clutch 100. The centrifugal clutch 100 includes a clutch plate 101, clutch weights 102, and a clutch outer 103, and the clutch weights 102 are pivotally supported by the clutch plate 101. Then, as a result of centrifugal force, the clutch weights 102 together with lining 102a fitted to the clutch weights 102 contact the inner peripheral surface of the clutch outer 103. In this way the centrifugal clutch 100 transmits rotation from the V-belt 10 to the driven shaft 1 via the base half pulley A and the movable half pulley 2.

Next, the operation of the present invention is explained. The cam ring B is latched and fixed at an end portion in the axial direction of the cylindrical shaft portion 51 of the boss member 5, which is disposed concentrically on the driven shaft 1. Therefore the cam ring B rotates together with the boss member 5. The base half pulley A is fitted to an end portion in the axial direction of the cylindrical shaft portion 51 of the boss member 5, so that the contact portions 71 of the fixed cams 7 on the cam ring B is n opposition to and contact the movable cams 4 provided on the rear surface 33 of the base half pulley A (see Figs. 4B, 4C, and 6A). Next, the movable half pulley 2 of the driven pulley is fitted to the cylindrical shaft portion 51 of the boss member 5, which is disposed concentrically on the driven shaft 1, so that the movable half pulley 2 can slide in the axial direction.

As a result of the operation of the movable half pulley 2, the base half pulley A can be displaced the distance j along the slanting surfaces of the contact portions 41, by the movable cams 4 moving relative to the cam ring B along the slanting portions of the contact portions 71 of the fixed cams 7, with the movable cams 4 being simultaneously displaced by ja in the axial direction, and by jb in the circumferential direction. As a result of the displacement j, the base half pulley A moves slightly in the axial direction away from (a slight movement) the cam ring B (see Fig. 6A), so the base half pulley A moves a small amount (a slight movement) towards the movable half pulley 2 (see Fig. 6B). As a result, the V-belt 10 is pressed from both sides by the base half pulley A and the movable half pulley 2, so the V-belt 10 is pinched.

Also, the base half pulley A is connected to the cam ring B by the spindle shaped pins 8. The mating portions 82 of the spindle shaped pins 8 are latched to the latching projections 621 of the latching hollow portions 62. Therefore, as a result of the elastic force of the mating portions 82, the base half pulley A and the cam ring B do not separate more than a certain distance, but the base half pulley A and the cam ring B maintain a normal correct separation distance (see Fig. 6B). During the non-operational state, the base half pulley A and the cam ring B are in their closest connected state, due to the elastic force of the spindle shaped pins 8.

As stated above, the base half pulley A is structured to move away from the cam ring B by a small amount in the axial direction, and move towards the movable half pulley 2 by a small amount. In this way, the V-belt 10 is pressed from both sides by the base half pulley A and the movable half pulley 2, so the V-belt 10 can be pinched, and the elastic force with which the movable half pulley 2 presses against the base half pulley A can be appropriately reduced. Also, the base half pulley A and the movable half pulley 2 do not apply excessive side loads to the V-belt 10, so V-belt wear is prevented, and the V-belt life can be extended. Further, it is possible to appropriately set the initial elastic force of the elastic spring 23 lower than the elastic force used in a conventional structure. Therefore, the excess force due to the elastic force at low engine torques can be reduced, friction losses can be reduced, and it is possible to improve the transmission ratio over all speed change areas.

Also, it is possible to stabilize the operation of the movable half pulley 2. Further, by making the contact portions 41 of the movable cams 4 slanting surfaces, and by causing slight separation in the axial direction by contact with the contact portions 71 of the fixed cams 7, it is possible to stabilize the cam force acting on the base half pulley A, so that both the base half pulley A and the movable half pulley 2 operate well with respect to the belt transmission force that corresponds appropriately to the engine torque. By providing the base half pulley A in this way, it is possible to reduce the force (load) in the elastic spring 23 on the movable half pulley 2 side, so it is possible to optimize the belt transmission friction force. Also, by being able to reduce the elastic force of the elastic spring 23, it is possible to set the resistance force to be the resultant of the force of contact between the movable cams 4 of the base half pulley A and the fixed cams 7 of the cam pulley B, and the spring force of the elastic spring 23 on the movable half pulley 2 side, so that the movable half pulley 2 will not separate from the base half pulley A when the speed reduction ratio is a maximum.

Also, when the speed reduction ratio is a minimum, because the spring force in the elastic spring 23 has been reduced in accordance with the maximum speed reduction ratio, the movable half pulley 2 and the base half pulley A can easily separate. In this way, it is possible to reduce the overall spring force (load), by the relative resultant force of the spring 23 and cam force on the movable half pulley 2 side and the cam force on the base half pulley A side. In other words, simply reducing the spring force which has been difficult until now, can be achieved by the two cam forces of the base half pulley A and the cam ring B and the movable half pulley 2.

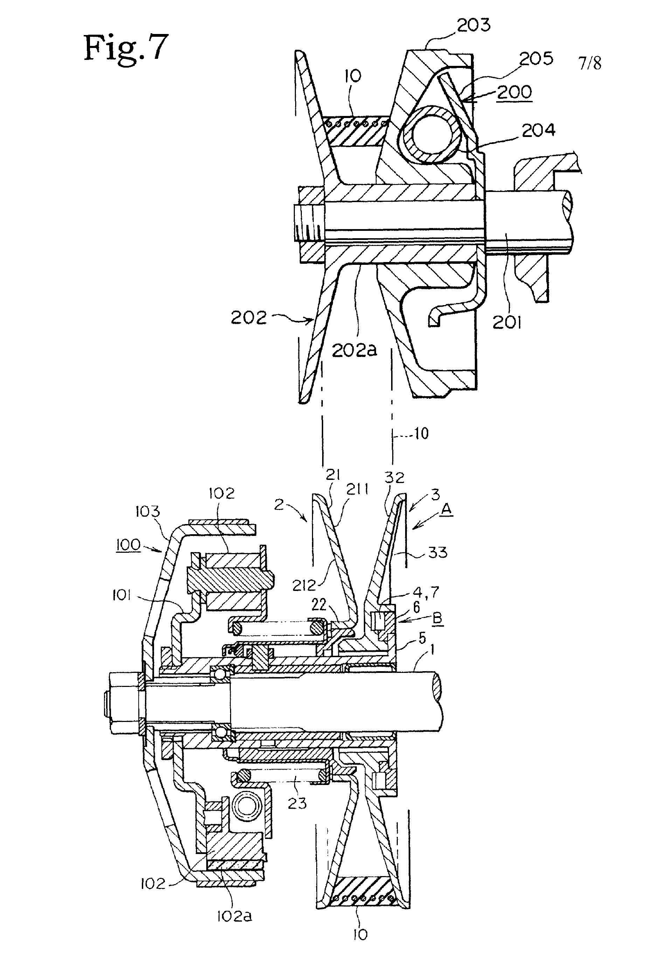

Fig. 7 shows an automatic transmission that uses the present invention as the driven pulley. A drive pulley 200 is a conventional commonly used pulley. A fixed half pulley 202 and a movable half pulley 203 are fitted to a drive shaft 201, which performs the role of the engine output shaft. The movable half pulley 203 is fitted to a cylindrical shaped boss member 202a of the fixed half pulley 202, so that the movable half pulley 203 can freely slide, and the movable half pulley 203 is moved towards the fixed half pulley 202 side by weight rollers 204 pressing against a roller support plate 205. As the movable half pulley 203 rotates, the weight rollers 204 can move towards the outer periphery of the movable half pulley 203. In this way the movable half pulley 203 can move towards the fixed half pulley 202.

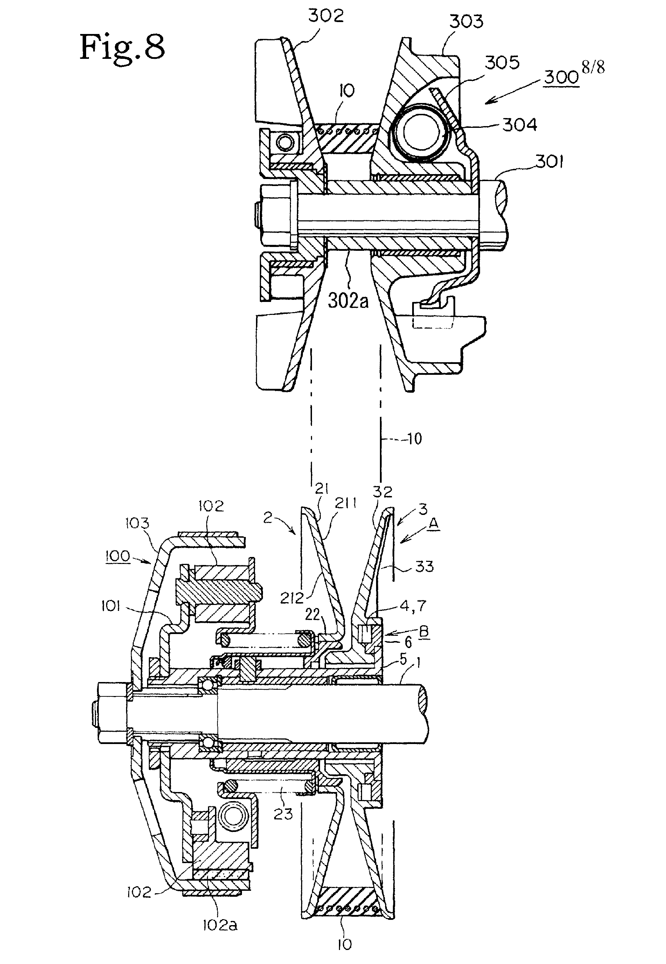

Also, in the drive pulley 300 shown in Fig. 8, a non-fixed half pulley 302 fitted to the end portion in the axial direction of a drive shaft 301 can be moved a small distance (a slight movement) in the axial direction towards a movable half pulley 303 by a cam mechanism or the like. This movement occurs when the non-fixed half pulley 302 receives a sudden rotational acceleration transmission from the V-belt 10. Also, the movable half pulley 303 is fitted to a cylindrical shaped boss shaft 302a so that the movable half pulley 303 can freely slide, and further, weight rollers 304 move (a slight movement) the movable half pulley 303 towards the non-fixed half pulley 302 by a roller support plate 305.

When the drive shaft 301 is suddenly accelerated, the non-fixed half pulley 302 can move (a slight movement) by a small amount towards the movable half pulley 303. For example, when suddenly starting or the like, the V-belt 10 can be instantaneously pressed by both the non-fixed half pulley 302 and the movable half pulley 303, so that slipping does not easily occur between the V-belt 10 and the non-fixed half pulley 302 and the movable half pulley 303. By using this drive pulley 300 with the driven pulley according to the present invention, it is possible to achieve an automatic transmission with excellent response when there is a sudden rotational acceleration, such as during a sudden start, or the like.

## Claims

1. A driven pulley in a V-belt type automatic transmission device, comprising:
a driven shaft;
a boss member that rotates together with the driven shaft;
a movable half pulley that rotates together with the boss member and moves in the axial direction;
a base half pulley, on which movable cams are formed on the rear surface of a pulley face and around the periphery of a boss hole portion, and for which the boss member is passed through the boss hole portion so that the base half pulley is slidably supported; and
a cam ring on which fixed cams are formed on a ring shaped base, and which is fixed to a shaft end portion of the boss member, wherein
the movable cams of the base half pulley can contact the fixed cams, and the movable cams can be spaced in the axial direction from the fixed cams.

2. A driven pulley in a V-belt type automatic transmission device, comprising:
a driven shaft;
a boss member that rotates together with the driven shaft;
a movable half pulley that rotates together with the boss member and moves in the axial direction;
a base half pulley, on which movable cams are formed on the rear surface of a pulley face and around the periphery of a boss hole portion, and for which the boss member is passed through the boss hole portion so that the base half pulley is slidably supported; and
a cam ring on which fixed cams are formed on a ring shaped base, and which is fixed to a shaft end portion of the boss member, wherein
the movable cams and the fixed cams are always in contact, and the positions of contact of at least one of the movable cams and the fixed cams are formed as slanting surfaces such that the movable cams are moved in the axial direction of the drive shaft accompanied by a movement of the fixed cams in the direction of rotation of the drive shaft.

3. The driven pulley in a V-belt type automatic transmission device according to claim 1 or 2, wherein the base half pulley and the cam ring are elastically pressed together in a continuous connection state.

4. The driven pulley in a V-belt type automatic transmission device according to claim 1 or 2, wherein the base half pulley and the cam ring are connected together by a spindle shaped pin having elasticity.

5. The driven pulley in a V-belt type automatic transmission device according to claim 1 or 2, wherein regulating portions are formed at appropriate intervals on the side of the contact portions of the movable cams in the base half pulley.

6. The driven pulley in a V-belt type automatic transmission device according to claim 1 or 2, wherein a plurality of the movable cams are formed at equal intervals along the circumferential direction around the periphery of the boss hole portion, and the number of fixed cams is the same as the number of movable cams, and the fixed cams are formed at the same intervals as the movable cams.
